# EUROPÄISCHE PATENTANMELDUNG

(11) **EP 4 488 043 A1**
(43) Veröffentlichungstag der Anmeldung: **08.01.2025**
(21) Anmeldenummer: 24184860.5
(22) Anmeldetag: 27.06.2024
(51) Int. Cl.: B29D 30/24, B29D 30/26

(54) **VORRICHTUNG ZUM AUFBAU EINER REIFENKARKASSE FÜR EINEN FAHRZEUGREIFEN**

(30) Priorität: 06.07.2023 DE 102023206405
(71) Anmelder: Continental Reifen Deutschland GmbH, 30175 Hannover (DE)
(72) Erfinder: Lohner, Alexander, 30175 Hannover (DE); Linne, Stefan, 30175 Hannover (DE)
(74) Vertreter: Continental Corporation

(57) **Zusammenfassung**

Die Erfindung betrifft eine Vorrichtung (10) zum Aufbau einer Reifenkarkasse, umfassend: i) einen ersten Grundkörper (12), ii) eine rotierbar gelagerte Zentralwelle (14), iii) eine auf der Zentralwelle angeordneten Reifenaufbautrommel (16), und iv) eine reversibel und zerstörungsfrei entlang der Zentralwellenrichtung Z verschiebbare erste Verschiebehülse (18) mit einem ersten Balgträger (20), wobei der erste Balgträger(20) reversibel und zerstörungsfrei entlang der radialen Richtung expandierbar ausgeführt ist, wobei die erste Verschiebehülse (18) in einem über eine erste Positioniereinrichtung (22) mit dem ersten Grundkörper (12) verbundenen und reversibel und zerstörungsfrei entlang der Zentralwellenrichtung Z verschiebbaren ersten Schlitten (24) gelagert ist, wobei der erste Schlitten (24) über eine zweite Positioniereinrichtung (26) mit einem reversibel und zerstörungsfrei entlang der Zentralwellenrichtung Z verschiebbaren zweiten Schlitten (28) verbunden ist, wobei die Vorrichtung (10) dazu eingerichtet ist, dass der erste Balgträger (20) in Folge einer Verschiebung des zweiten Schlittens (28) relativ zum ersten Schlitten (24) in radialer Richtung expandiert werden kann.

## Beschreibung

Die Erfindung betrifft eine Vorrichtung zum Aufbau einer Reifenkarkasse und ein System zum Aufbau einer Reifenkarkasse, umfassend eine entsprechende Vorrichtung.

Für die Herstellung moderner Fahrzeugluftreifen werden regelmäßig sogenannte Reifenaufbautrommeln eingesetzt, auf denen die Fahrzeugreifen durch sequentielle Applikation der einzelnen Lagen in effizienter Weise aufgebaut werden können.

In der Praxis kommen beispielsweise sogenannte zweistufige Verfahren zum Einsatz, bei denen in der ersten Stufe die Karkasse des Fahrzeugreifens hergestellt wird. Die hierfür verwendete Reifenaufbaumaschine verfügt regelmäßig über eine expandier- und einfahrbare Reifenaufbautrommel sowie seitlich der Reifenaufbautrommel positionierbare, segmentierte sowie expandier- und einfahrbare Balgträger mit aufblähbaren Bälgen. Diese Anordnungen aus Balgträger und aufblähbaren Bälgen dienen dabei dazu, Bauteile der Karkasse im Seitenwandbereich korrekt zu applizieren, beispielsweise durch ein Hochschlagen von zuvor auf den aufblähbaren Bälgen positionierten Bauteilen.

Weitere Informationen zum technologischen Hintergrund entsprechender Vorrichtungen und Verfahren sind beispielsweise in der DE 10 2013 221 967 A1, DE 10 2008 037 535 A1, US 11534996 B2, US 3676261 A, US 3713950 A, US 3784437 A, CN 200967277 Y oder der CN 2875779 Y offenbart.

Bei den aus dem Stand der Technik bekannten Vorrichtungen zum Aufbau einer Reifenkarkasse sind die Balgträger mit den aufblähbaren Bälgen sowie die Reifenaufbautrommel zumeist auf einer gemeinsamen Maschinenwelle gelagert. Der Antrieb für das axiale Verschieben der Balgträger und das radiale Expandieren kann dabei sowohl pneumatisch als auch elektromotorisch erfolgen. Die Übertragung der für die Verschiebung bzw. Expansion benötigten Kräfte erfolgt im Stand der Technik zumeist über einzelne Schubstangen. Solche Balgträgerantriebe, bei denen die Bewegung mittels einzelner Schubstangen übertragen wird, haben den Nachteil, dass sie aufgrund der Nachgiebigkeit der Umgebungskonstruktion in vielen Fällen zu einem Verkanten und dadurch zu einem erhöhten Verschleiß führen können. Generell problematisch ist dabei, wenn die Balgträgerantriebe mit zu viel Spiel behaftet sind. Der Einsatz von pneumatischen Antrieben im Stand der Technik ist zudem in vielen Fällen mit dem Nachteil verbunden, dass keine definierten Zwischenpositionen angefahren werden können.

Das mitunter hohe Gewicht der Reifenaufbautrommel kann zudem zu einer unerwünschten Wellendurchbiegung führen, welche bei unterschiedlich schweren Reifenaufbautrommeln zudem unterschiedlich groß ausfallen kann. Dies erfordert in den aus dem Stand der Technik bekannten Vorrichtungen regelmäßig eine aufwendige Ausrichtung der Maschinenwelle.

Bei den aus dem Stand der Technik bekannten Vorrichtungen zum Aufbau einer Reifenkarkasse können einzelne oder mehrere der vorstehend beschriebenen Faktoren zu einer Ungenauigkeit im Reifenaufbauprozess und damit zu einer unerwünschten Verschlechterung der Qualität der mit den Vorrichtungen herstellbaren Reifenkarkassen führen.

Die primäre Aufgabe der vorliegenden Erfindung war es, die Nachteile des Standes der Technik auszuräumen oder zumindest zu verringern.

Insbesondere war es die Aufgabe der vorliegenden Erfindung, eine Vorrichtung zum Aufbau einer Reifenkarkasse und ein darauf aufbauendes System anzugeben, mit denen Reifenkarkassen mit hoher Präzision und entsprechend hoher Qualität hergestellt werden können. Hierbei war es eine Aufgabe der vorliegenden Erfindung, dass insbesondere das unerwünschte Spiel in der Vorrichtung bzw. den eingesetzten Antrieben möglichst minimiert werden sollte.

Darüber hinaus war es eine Aufgabe der vorliegenden Erfindung, dass wünschenswerterweise auch definierte Zwischenpositionen des Balgträgers wiederholgenau anfahrbar sein sollten.

Es war eine weitere Aufgabe der vorliegenden Erfindung, dass mit der anzugebenden Vorrichtung Reifenkarkassen in einer zeit- und kosteneffizienten Art und Weise herstellbar sein sollten, wobei es wünschenswert war, dass durch die Möglichkeit zu einer präzisen Herstellung insbesondere auch der Ausschuss an nicht-spezifikationsgemäßen Reifenkarkassen minimierbar sein sollte.

Zudem war es eine Aufgabe der vorliegenden Erfindung, die Notwendigkeit zur Ausrichtung der Maschinenwelle zu reduzieren, wobei wünschenswerterweise Mittel und Maßnahmen vorgesehenen werden sollten, um eine entsprechende Ausrichtung der Maschinenwelle in möglichst einfacher Art und Weise zu erlauben.

Die Erfinder der vorliegenden Erfindung haben nunmehr gefunden, dass sich die vorstehend beschriebenen Aufgaben lösen lassen, wenn um eine Zentralwelle, an der die Reifenaufbautrommel befestigt wird, eine axial verschiebbare Verschiebehülse angeordnet wird, an der der Balgträger befestigt wird, wenn diese Verschiebehülse in einem ersten Schlitten radial und axial gelagert wird, sodass die über diesen ersten Schlitten vorzugsweise mittels eines Kugelgewindetriebes axial verschiebbar ist, sofern auf diesem ersten Schlitten ein zweiter Schlitten angeordnet wird, der ebenfalls axial verschiebbar ist und dessen Axialbewegung gleichmäßig, beispielsweise über mehrere am Umfang des Verschiebehülse angeordnete Schubstangen, zum Balgträger übertragen werden kann, um dort eine radiale Expansion des Balgträgers zu bewirken, beispielsweise über einen Kegelmechanismus, wie es in den Ansprüchen definiert ist.

Die erfindungsgemäße Vorrichtung zeichnet sich durch eine hohe Steifigkeit und in vorteilhafter Weise durch ein geringes Spiel aus, was eine hohe Positionier- und Wiederholgenauigkeit zur Folge hat. In vorteilhafter Weise wird somit eine Vorrichtung zum Aufbau einer Reifenkarkasse erhalten, mit der in zeit- und kosteneffizienter Art und Weise mit hoher Präzision Reifenkarkassen hergestellt werden können, welche eine hohe Qualität aufweisen und für den Einsatz in leistungsfähigen Fahrzeugluftreifen geeignet sind, wobei in vorteilhafter Weise der anfallende Ausschuss an nicht-spezifikationsgemäßen Reifenkarkassen minimiert werden kann. Darüber hinaus verringert sich durch die vorteilhafte Konstruktion entsprechender Vorrichtungen das Ausmaß der Wellendurchbiegung. Dahingehend ist es den Erfindern der vorliegenden Erfindung zudem gelungen, geeignete Mittel zu identifizieren, mit denen eine einfache Einstellbarkeit der erfindungsgemäßen Vorrichtung zur Kompensation der verbleibenden Wellendurchbiegung erreicht werden kann.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft insbesondere eine Vorrichtung zum Aufbau einer Reifenkarkasse, umfassend:
i) einen ersten Grundkörper,
ii) eine rotierbar gelagerte Zentralwelle,
iii) eine auf der Zentralwelle angeordneten Reifenaufbautrommel, und
iv) eine reversibel und zerstörungsfrei entlang der Zentralwellenrichtung verschiebbare erste Verschiebehülse mit einem ersten Balgträger, wobei der erste Balgträger reversibel und zerstörungsfrei entlang der radialen Richtung expandierbar ausgeführt ist,
wobei die erste Verschiebehülse in einem über eine erste Positioniereinrichtung mit dem ersten Grundkörper verbundenen und reversibel und zerstörungsfrei entlang der Zentralwellenrichtung verschiebbaren ersten Schlitten gelagert ist, wobei der erste Schlitten über eine zweite Positioniereinrichtung mit einem reversibel und zerstörungsfrei entlang der Zentralwellenrichtung verschiebbaren zweiten Schlitten verbunden ist, wobei die Vorrichtung dazu eingerichtet ist, dass der erste Balgträger in Folge einer Verschiebung des zweiten Schlittens relativ zum ersten Schlitten in radialer Richtung expandiert werden kann.

Die erfindungsgemäße Vorrichtung dient dem Aufbau einer Reifenkarkasse und ist somit für den Einsatz in Reifenaufbauverfahren ausgelegt. Die Reifenkarkasse kann insbesondere eine Reifenkarkasse für Fahrzeugluftreifen sein.

Die erfindungsgemäße Vorrichtung umfasst zunächst einen Grundkörper, eine rotierbar gelagerte Zentralwelle und eine auf der Zentralwelle angeordnete Reifenaufbautrommel. Hinsichtlich dieses Grundaufbaus entspricht die erfindungsgemäße Vorrichtung damit den aus dem Stand der Technik bekannten Reifenaufbauvorrichtungen. Der Grundkörper fungiert als Standfuß und Halterung, um die rotierbar gelagerte Zentralwelle beispielsweise horizontal zum Untergrund auszurichten. Der erste Grundkörper dient dabei in vorteilhafter Weise auch dazu, die für die Vorrichtung benötigten Antriebseinheiten sowie gegebenenfalls vorhandene Steuerungselektronik sicher zu verstauen.

Für im Wesentlichen alle Ausführungsformen relevant ist dabei eine erfindungsgemäße Vorrichtung, wobei die Vorrichtung zusätzlich umfasst:
v) eine Wellenantriebseinheit zur Rotation der Zentralwelle, wobei die Wellenantriebseinheit bevorzugt ein Elektromotor ist, besonders bevorzugt ein Servomotor. Bevorzugt ist insoweit eine erfindungsgemäße Vorrichtung, wobei die Wellenantriebseinheit bevorzugt im ersten Grundkörper angeordnet ist.

Bevorzugt ist wegen der guten Automatisierbarkeit zusätzlich oder alternativ auch eine erfindungsgemäße Vorrichtung, wobei die Vorrichtung zusätzlich umfasst:
vi) eine elektronische Steuereinheit zur Steuerung der Vorrichtung.

Das Konzept von Reifenaufbautrommeln ist dem Fachmann im Bereich der Reifenherstellung umfassend vertraut. Solche Reifenaufbautrommeln können insbesondere hinsichtlich ihres Radius verändert werden. In bevorzugten Ausgestaltungen wird die Reifenaufbautrommel in der erfindungsgemäßen Vorrichtung als auswechselbare Reifenaufbautrommel ausgeführt, beispielsweise indem sie über einen geeigneten Mechanismus, beispielsweise einen Aufsteckmechanismus, mit der Zentralwelle verbunden wird. Eine entsprechende austauschbare Reifenaufbautrommel ermöglicht es in vorteilhafter Weise, die erfindungsgemäße Vorrichtung zur Herstellung unterschiedlich dimensionierter Reifenkarkassen zu verwenden. Mit anderen Worten handelt es sich um eine erfindungsgemäße Vorrichtung, wobei die Reifenaufbautrommel reversibel und zerstörungsfrei entlang der radialen Richtung expandierbar ausgeführt ist. Bevorzugt ist eine erfindungsgemäße Vorrichtung, wobei die Reifenaufbautrommel reversibel und zerstörungsfrei austauschbar ausgeführt ist.

Die erfindungsgemäße Vorrichtung umfasst zudem einen ersten Balgträger, wobei dieser erste Balgträger reversibel und zerstörungsfrei expandierbar ausgeführt ist, wobei die Expansion zumindest anteilig, bevorzugt überwiegend, besonders bevorzugt im Wesentlichen vollständig, entlang der radialen Richtung der Zentralwelle erfolgt, welche orthogonal zu der Längsachse der Zentralwelle verläuft. Entsprechende Funktionalitäten sind dem Fachmann aus dem Stand der Technik von Balgträgern bekannt. Solche Balgträger dienen dazu, für den späteren Einsatz im Reifenaufbauverfahren aufblähbare Bälge zu tragen, deren Expansion zusammen mit der Expansion der Balgträger dazu dient, Bauteile der Reifenkarkasse, insbesondere im Seitenwandbereich der Reifen, zuverlässig zu applizieren, beispielsweise durch ein kontrolliertes Hochschlagen entsprechender Seitenwandbauteile. Für im Wesentlichen sämtliche Ausführungsformen relevant ist entsprechend auch eine erfindungsgemäße Vorrichtung, wobei der erste Balgträger einen oder mehrere reversibel und zerstörungsfrei aufblähbare Bälge umfasst. Bevorzugt ist eine erfindungsgemäße Vorrichtung, wobei der erste Balgträger reversibel und zerstörungsfrei austauschbar ausgeführt ist.

Wesentlich für die erfindungsgemäße Vorrichtung ist, dass diese über eine erste Verschiebehülse verfügt, welche die Zentralwelle abschnittsweise umgibt und so ausgelegt ist, dass sie reversibel und zerstörungsfrei entlang der Zentralwellenrichtung, d. h. entlang der Längsrichtung der Zentralwelle, verschoben werden kann. Bevorzugt ist eine erfindungsgemäße Vorrichtung, wobei die erste Verschiebehülse die Zentralwelle über einen Großteil des Umfangs, bevorzugt über 80 % oder mehr des Umfangs, besonders bevorzugt über 90 % oder mehr des Umfangs, ganz besonders bevorzugt über 95 % oder mehr des Umfangs, insbesondere über im Wesentlichen 100 % des Umfangs, umgibt.

Auch wenn es zumindest theoretisch denkbar wäre, die Verschiebehülse rotationsfest auszuführen und die Zentralwelle im Inneren der Verschiebehülse rotierbar zu lagern, ist es mit Blick auf den späteren Anwendungsfall für im Wesentlichen alle Ausführungsformen bevorzugt, wenn die erste Verschiebehülse sich mit der Zentralwelle dreht. Hierfür schlagen die Erfinder vor, dass die Umsetzung über eine Gleitführung auf eine formschlüssige Verbindung setzen kann, um eine freie Rotation der Verbindungshülse um die Zentralwelle herum zu verhindern. Bevorzugt ist entsprechend eine erfindungsgemäße Vorrichtung, wobei die Zentralwelle über eine Gleitführung mit der ersten Verschiebehülse verbunden ist, bevorzugt umfassend eine formschlüssige Verbindung zwischen der Zentralwelle und der ersten Verschiebehülse, besonders bevorzugt umfassend eine Passfederverbindung.

Die axiale Verschiebung der ersten Verschiebehülse wird in erfindungsgemäßen Vorrichtungen über einen ersten Schlitten realisiert, welcher mit dem ersten Grundkörper verbunden ist. Um trotz der Anbindung des ersten Schlittens an den ersten Grundkörper eine freie Rotierbarkeit der ersten Verschiebehülse zu ermöglichen, regen die Erfinder an, dass diese über geeignete Lager bevorzugt Kugellager im ersten Schlitten gelagert werden kann. Bevorzugt ist hierfür eine erfindungsgemäße Vorrichtung, wobei die erste Verschiebehülse über ein oder mehrere Lager, bevorzugt Wälzlager, besonders bevorzugt Kugellager, mit dem ersten Schlitten verbunden ist.

Die Verschiebung des ersten Schlittens relativ zum ersten Grundkörper und damit mittelbar die Verschiebung der Verschiebehülse entlang der Zentralwellenrichtung, erfolgt über eine erste Positioniereinrichtung. Die Erfinder haben insoweit erkannt, dass eine besonders effiziente Verschiebung des ersten Schlittens, welche sich durch ein geringes Spiel auszeichnet, und die eine besonders wiederholgenaue und präzise Positionierung des ersten Schlittens bzw. der Verschiebehülse ermöglicht, durch den Einsatz von Schraubgetrieben, insbesondere eines Kugelgewindetriebes, möglich ist, wobei der erste Schlitten zur weiteren Unterstützung einer kontrollierten Positionierung in bevorzugten Ausgestaltungen über Führungsschienen mit dem Grundkörper verbunden werden kann. Bevorzugt ist demgemäß eine erfindungsgemäße Vorrichtung, wobei die erste Positioniereinrichtung ein oder mehrere Schraubgetriebe, bevorzugt ein Kugelgewindetrieb, umfasst. Bevorzugt ist zusätzlich oder alternativ eine erfindungsgemäße Vorrichtung, wobei die erste Positioniereinrichtung ein oder mehrere am Grundkörper angeordnete Führungsschienen zum Führen des ersten Schlittens umfasst.

Über den ersten Schlitten hinaus umfasst die erfindungsgemäße Vorrichtung einen zweiten Schlitten, welcher selbst über eine zweite Positioniereinrichtung mit dem ersten Schlitten verbunden ist, sodass der zweite Schlitten reversibel und zerstörungsfrei relativ zum ersten Schlitten entlang der Zentralwellenrichtung verschoben werden kann. Auch für die zweite Positioniereinrichtung hat sich hierbei der Einsatz eines Schraubgetriebes, insbesondere eines Kugelgewindetriebes, als besonders vorteilhaft erwiesen, insbesondere wenn dies wiederum mit dem Einsatz von Führungsschienen kombiniert wird. Bevorzugt ist eine erfindungsgemäße Vorrichtung, wobei die zweite Positioniereinrichtung ein oder mehrere Schraubgetriebe, bevorzugt ein Kugelgewindetrieb, umfasst. Bevorzugt ist wiederum zusätzlich oder alternativ eine erfindungsgemäße Vorrichtung, wobei die zweite Positioniereinrichtung ein oder mehrere am ersten Schlitten angeordnete Führungsschienen zum Führen des zweiten Schlittens umfasst.

Sowohl die erste Positioniereinrichtung als auch die zweite Positioniereinrichtung können jeweils über eine Antriebseinheit angetrieben werden. Für eine besonders präzise und kontrollierte Einstellung der Position der zwei Schlitten schlagen der Erfinder vor, dass insbesondere der Einsatz von Servomotoren vorteilhaft ist. Bevorzugt ist eine erfindungsgemäße Vorrichtung, wobei die Vorrichtung zusätzlich umfasst:
vii.a) eine erste Antriebseinheit zur Verschiebung des ersten Schlittens entlang der Zentralwellenrichtung mit der ersten Positioniereinrichtung, wobei die erste Antriebseinheit bevorzugt ein Elektromotor ist, besonders bevorzugt ein Servomotor. Besonders bevorzugt ist eine erfindungsgemäße Vorrichtung, wobei die erste Antriebseinheit bevorzugt am oder im Grundkörper angeordnet ist.

Bevorzugt ist zusätzlich oder alternativ eine erfindungsgemäße Vorrichtung, wobei die Vorrichtung zusätzlich umfasst:
vii.b) eine zweite Antriebseinheit zur Verschiebung des zweiten Schlittens entlang der Zentralwellenrichtung mit der zweiten Positioniereinrichtung, wobei die zweite Antriebseinheit bevorzugt ein Elektromotor ist, besonders bevorzugt ein Servomotor. Bevorzugt ist eine erfindungsgemäße Vorrichtung, wobei die zweite Antriebseinheit bevorzugt am oder im ersten Schlitten angeordnet ist.

In erfindungsgemäßen Vorrichtungen ist der erste Balgträger an der ersten Verschiebehülse angeordnet, deren Position über den ersten Schlitten gesteuert werden kann. Der zweite Schlitten dient nunmehr dazu, über einen geeigneten Mechanismus auf den Balgträger einzuwirken, sodass dieser in radialer Richtung expandiert werden kann. Als besonders vorteilhafte Ausgestaltung für die Umsetzung dieser Funktionalität erachten es die Erfinder dabei, auf einen Kegelmechanismus zurückzugreifen. Ein solcher Kegelmechanismus ist dem Fachmann aus dem Stand der Technik aus anderen Anwendungsfeldern bekannt und umfasst zwei miteinander wechselwirkende Teile, von denen zumindest ein Teil derart angeschrägt ist, dass die axiale Verschiebung des komplementären zweiten Teils dazu führt, dass der Balgträger radial nach außen verschoben wird. Beispielsweise kann der segmentierte Balgträger im Inneren mit einer Aufnahme versehen werden, welche sich an ihrem Ende in Richtung der Reifenaufbautrommel verjüngt und entsprechend schräge Wandungen aufweist. Wenn der zweite Schlitten, der die Innenseite der Aufnahme beispielsweise mit einem umlaufenden Ringelement kontaktiert, gegen den an der ersten Verschiebehülse fixierten Balgträger in axialer Richtung verfahren wird, drückt die Ringstruktur in den sich verjüngenden Teil der Aufnahme und drückt diese dadurch nach außen. Besonders bevorzugt ist somit eine erfindungsgemäße Vorrichtung, wobei der erste Balgträger über einen Kegelmechanismus mit dem zweiten Schlitten in Verbindung steht, wobei die Vorrichtung dazu eingerichtet ist, dass der Kegelmechanismus bei Verschiebung des zweiten Schlittens relativ zum ersten Schlitten entlang der Zentralwellenrichtung in Richtung der Reifenaufbautrommel eine reversible und zerstörungsfreie Expansion des erste Balgträgers entlang der radialen Richtung bewirkt.

Die Erfinder schlagen vor, dass die für das Auslösen des Kegelmechanismus notwendige Kraft beispielsweise über Schubstangen übertragen werden kann, wobei es mit Blick auf die Präzision und eine gewünschte möglichst gleichmäßige Expansion des Balgträgers vorteilhaft ist, die eingesetzten Schubstangen möglichst gleichmäßig über den Umfang zu verteilen. Alternativ kann nach Einschätzung der Erfinder jedoch auch eine weitere Verschiebehülse eingesetzt werden, welche um die erste Verschiebehülse herum angeordnet und zu dieser wiederum reversibel und zerstörungsfrei in der Zentralwellenrichtung verschiebbar ist. Bevorzugt ist eine erfindungsgemäße Vorrichtung, wobei der Kegelmechanismus über zwei oder mehrere, bevorzugt drei oder mehr, besonders bevorzugt vier oder mehr, Schubstangen mit dem zweiten Schlitten verbunden ist, wobei die Schubstangen bevorzugt über den Umfang der Zentralwelle verteilt, bevorzugt im Wesentlichen gleichmäßig über den Umfang der Zentralwelle verteilt, angeordnet sind, oder wobei der Kegelmechanismus über eine weitere Verschiebehülse mit dem zweiten Schlitten verbunden ist, wobei die weitere Verschiebehülse die erste Verschiebehülse bevorzugt vollumfänglich umgibt.

Um eine etwaige verbleibende Wellendurchbiegung der Zentralwelle bei Bedarf in einfacher Weise ausgleichen zu können, schlagen die Erfinder vor, dass die Vorrichtung in vorteilhafter Weise mit Nivellierfüßen ausgerüstet werden kann. Entsprechende Nivellierfüße sind dem Fachmann aus anderen Anwendungen bekannt und erlauben eine einfache sowie zeit- und kosteneffiziente Ausrichtung des ersten Grundkörpers und damit eine leichtere Kompensation der Wellendurchbiegung. Bevorzugt ist eine erfindungsgemäße Vorrichtung, wobei der erste Grundkörper drei oder mehr, bevorzugt vier oder mehr, Nivellierfüße umfasst, wobei die Vorrichtung dazu eingerichtet ist, dass die Ausrichtung der Zentralwelle relativ zum Untergrund über die Nivellierfüße eingestellt werden kann.

Die Erfindung betrifft auch ein System zum Aufbau einer Reifenkarkasse, umfassend eine erfindungsgemäße Vorrichtung sowie:
I) einen zweiten Grundkörper,
II) eine rotierbar gelagerte Gegenwelle,
III) einen am Ende der Gegenwelle angeordneten Verbindungsmechanismus zur reversiblen und zerstörungsfreien Verbindung der Gegenwelle mit der Zentralwelle, und
IV) einen an der Gegenwelle angeordnete Trägerstruktur mit einem zweiten Balgträger, wobei der zweite Balgträger reversibel und zerstörungsfrei entlang der radialen Richtung expandierbar ausgeführt ist.

Der Fachmann versteht, dass die Reifenaufbautrommel in der erfindungsgemäßen Vorrichtung in der weit überwiegenden Zahl der Fälle den Abschluss der Zentralwelle bilden wird und die entsprechende erfindungsgemäße Vorrichtung somit nur einen Balgträger umfasst. Um in effizienter Weise beiderseits der hergestellten Reifenkarkasse Bauteile applizieren zu können, ist in diesem Fall ein zweiter Balgträger notwendig.

Dieser zweite Balgträger wird, wie es auch aus dem Stand der Technik bekannt ist, bevorzugt durch eine zweite Vorrichtung bereitgestellt, in der der zweite Balgträger über eine geeignete Trägerstruktur an einer Gegenwelle angeordnet ist, welche wiederum in einem eigenen Grundkörper aufgehangen und mit der Zentralwelle verbindbar ist.

Die von der erfindungsgemäßen Vorrichtung gelösten Probleme treten dabei insbesondere für den Teil des resultierenden Systems zum Aufbau von Reifenkarkassen auf, das die Reifenaufbautrommel trägt, da für diesen Teil das größte Gewicht bzw. -bei der bevorzugten Ausführung der Reifenaufbautrommel als austauschbare Reifenaufbautrommel- die größten Schwankungen im Gewicht auftreten. Entsprechend kann der zweite Teil des Systems in vorteilhafter Weise vergleichsweise einfach ausgeführt werden, beispielsweise indem der gesamte Maschinenkasten, d. h. inklusive Balgträger axial verfahren wird, ohne dass dabei eine Reifenaufbautrommel positioniert und/oder angetrieben werden muss.

Trotz der Möglichkeit, den zweiten Teil des Systems, welcher mit der erfindungsgemäßen Vorrichtung wechselwirkt, vergleichsweise einfach ausführen zu können, ist es für besonders anspruchsvolle Anwendungen bevorzugt, auch den komplementären zweiten Teil des Systems unter Einsatz einer Anordnung auszuführen, die der der erfindungsgemäßen Vorrichtung entspricht. Bevorzugt ist entsprechend ein erfindungsgemäßes System, wobei die Trägerstruktur eine reversibel und zerstörungsfrei entlang der Gegenwellenrichtung verschiebbare zweite Verschiebehülse umfasst, wobei die zweite Verschiebehülse in einem über eine dritte Positioniereinrichtung mit dem zweiten Grundkörper verbundenen und reversibel und zerstörungsfrei entlang der Gegenwellenrichtung verschiebbaren dritten Schlitten gelagert ist, wobei der dritte Schlitten über eine vierte Positioniereinrichtung mit einem reversibel und zerstörungsfrei entlang der Gegenwellenrichtung verschiebbaren vierten Schlitten verbunden ist, wobei das System dazu eingerichtet ist, dass der zweite Balgträger in Folge einer Verschiebung des vierten Schlittens relativ zum dritten Schlitten in radialer Richtung expandiert werden kann.

Der Fachmann versteht insoweit, dass die vorstehenden Ausführungen zu den einzelnen Bestandteilen der erfindungsgemäßen Vorrichtung in entsprechender Weise auf die Bestandteile des zweiten Teils des erfindungsgemäßen Systems zu übertragen sind, beispielsweise hinsichtlich der Ausgestaltung des dritten Schlittens und des vierten Schlittens, welche sich an bevorzugten Ausgestaltungen des ersten Schlittens bzw. zweiten Schlittens orientieren.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Querschnittsansicht durch eine erfindungsgemäße Vorrichtung in einer bevorzugten Ausführungsform;
- Fig. 2: eine schematische perspektivische Darstellung der Vorrichtung gemäß Fig. 1 in einem ersten Betriebszustand;
- Fig. 3: eine schematische perspektivische Darstellung der Vorrichtung gemäß Fig. 1 in einem zweiten Betriebszustand; und
- Fig. 4: eine schematische perspektivische Darstellung der Vorrichtung gemäß Fig. 1 in einem dritten Betriebszustand.

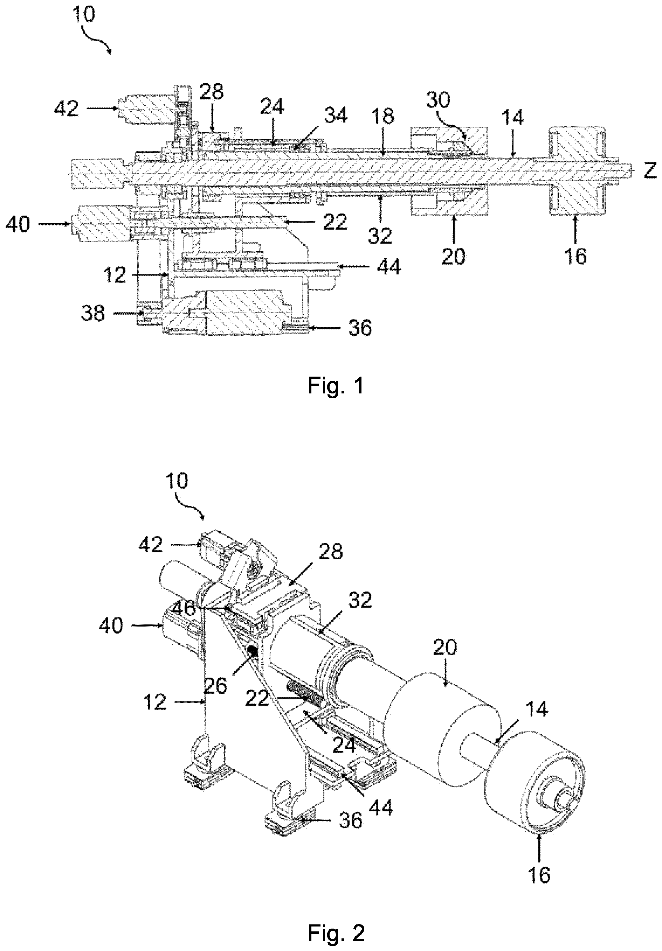

Fig. 1 zeigt eine bevorzugte erfindungsgemäße Vorrichtung 10 in einer schematischen Querschnittsdarstellung. Der erste Grundkörper 12, welcher die weiteren Bestandteile der Vorrichtung 10 trägt, ruht auf vier Nivellierfüßen 36 und kann dadurch in vorteilhafter Weise leicht ausgerichtet werden, um beispielsweise eine verbleibende Wellendurchbiegung zu kompensieren.

Die Vorrichtung 10 umfasst eine Zentralwelle 14, welche von einer Wellenantriebseinheit 38 angetrieben wird und an deren Ende eine Reifenaufbautrommel 16 angeordnet ist, welche durch einen Steckmechanismus reversibel und zerstörungsfrei austauschbar ausgeführt ist. Um die Zentralwelle 14 herum erstreckt sich vollumfänglich die erste Verschiebehülse 18, an welcher der segmentierte und expandierbare Balgträger 20 befestigt ist. Die erste Verschiebehülse 18 ist durch den Einsatz geeigneter Lager 34, beispielsweise Kugellager, rotierbar in einem ersten Schlitten 24 gelagert, welcher über eine erste Positioniereinrichtung 22 entlang der Zentralwellenrichtung Z verschiebbar ist, um damit mittelbar auch den Balgträger 20 entlang der Zentralwellenrichtung Z zu verschieben.

Die entsprechende Verschiebbarkeit wird über eine erste Positionierungseinrichtung 22 realisiert, welche im gezeigten Beispiel der Fig. 1 einen Kugelgewindetrieb umfasst und über eine erste Antriebseinheit 40 angetrieben wird. Der erste Schlitten 24 läuft dabei auf zwei erste Führungsschienen 44, welche am ersten Grundkörper 12 montiert sind. Der erste Schlitten 24 ist über eine zweite Positioniereinrichtung 26 mit dem zweiten Schlitten 28 verbunden, wobei die zweite Positioniereinrichtung 26 wiederum auf einen oder mehrere Kugelgewindetriebe zurückgreift und über eine zweite Antriebseinheit 42 angetrieben wird, wobei die reversible und zerstörungsfreie Verschiebbarkeit entlang der Zentralwellenrichtung Z durch zweite Führungsschienen 46 befördert wird, welche auf dem ersten Schlitten 24 montiert sind.

Die zweite Positioniereinrichtung 26 ist in Fig. 1 nicht dargestellt, da die entsprechenden Kugelgewindetriebe außerhalb der Querschnittsebene links und rechts angeordnet sind, ist aber in den Fig. 2 bis 4 deutlich zu erkennen. Der zweite Schlitten 28 überträgt die Kraft der zweiten Positioniereinrichtung 26 über Schubstangen 32 an einen Kegelmechanismus 30, mittels dem der erste Balgträger 20, welcher an der ersten Verschiebehülse 18 angeordnet ist, infolge einer Verschiebung des zweiten Schlittens 28 relativ zum ersten Schlitten 24 in radialer Richtung expandiert werden kann.

Die Fig. 2, 3 und 4 zeigen jeweils die bevorzugte Vorrichtung 10 der Fig. 1 in einer schematischen perspektivischen Ansicht und visualisieren drei verschiedenen Betriebszustände der entsprechenden Vorrichtung 10, wie sie im Zuge eines Reifenaufbauverfahrens auftreten können.

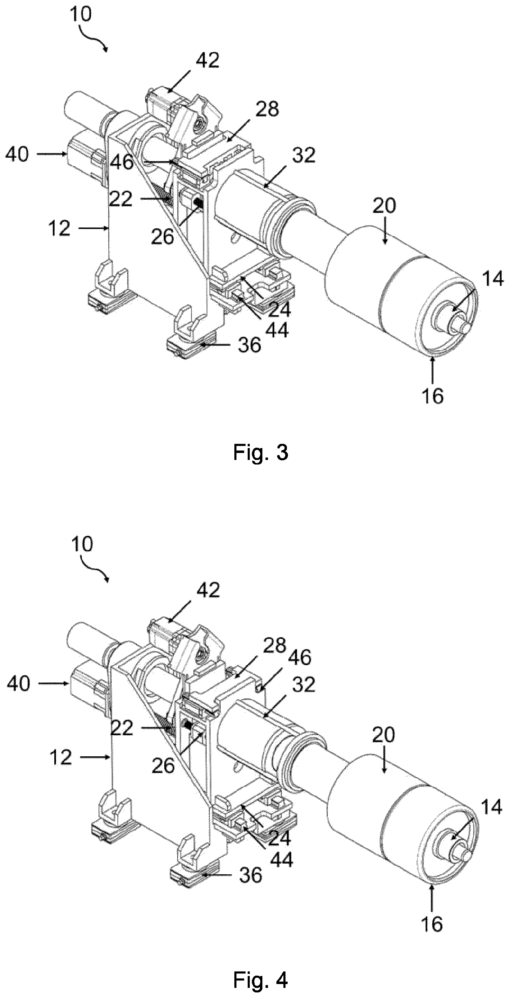

Fig. 2 visualisiert dabei den Grundzustand der Vorrichtung 10, wobei sowohl der erste Schlitten 24 als auch der zweite Schlitten 28 möglichst weit zurückgefahren sind. Fig. 3 veranschaulicht ausgehend von der Grundposition der Fig. 2 die Verschiebung des ersten Schlitten 24 mit der ersten Positioniereinrichtung 22. Fig. 4 zeigt abschließend den Endzustand, in dem auch der zweite Schlitten 28 mit der zweiten Positioniereinheit 26 möglichst weitgehend in Richtung der Reifenaufbautrommel 16 verfahren ist, wobei die Expansion der Reifenaufbautrommel 16, welche durch die Verschiebung des zweiten Schlittens 28 bewirkt wird, in der Fig. 3 aus Gründen der Einfachheit nicht dargestellt ist.

### Bezugszeichenliste

- 10: Vorrichtung
- 12: erster Grundkörper
- 14: Zentralwelle
- 16: Reifenaufbautrommel
- 18: erste Verschiebehülse
- 20: erster Balgträger
- 22: erste Positioniereinrichtung
- 24: erster Schlitten
- 26: zweite Positioniereinrichtung
- 28: zweiter Schlitten
- 30: Kegelmechanismus
- 32: Schubstangen
- 34: Lager
- 36: Nivellierfüße
- 38: Wellenantriebseinheit
- 40: erste Antriebseinheit
- 42: zweite Antriebseinheit
- 44: erste Führungsschienen
- 46: zweite Führungsschienen

- Z: Zentralwellenrichtung

## Patentansprüche

1. Vorrichtung (10) zum Aufbau einer Reifenkarkasse, umfassend:
i) einen ersten Grundkörper (12),
ii) eine rotierbar gelagerte Zentralwelle (14),
iii) eine auf der Zentralwelle angeordneten Reifenaufbautrommel (16), und
iv) eine reversibel und zerstörungsfrei entlang der Zentralwellenrichtung Z verschiebbare erste Verschiebehülse (18) mit einem ersten Balgträger (20), wobei der erste Balgträger (20) reversibel und zerstörungsfrei entlang der radialen Richtung expandierbar ausgeführt ist,
wobei die erste Verschiebehülse (18) in einem über eine erste Positioniereinrichtung (22) mit dem ersten Grundkörper (12) verbundenen und reversibel und zerstörungsfrei entlang der Zentralwellenrichtung Z verschiebbaren ersten Schlitten (24) gelagert ist, wobei der erste Schlitten (24) über eine zweite Positioniereinrichtung (26) mit einem reversibel und zerstörungsfrei entlang der Zentralwellenrichtung Z verschiebbaren zweiten Schlitten (28) verbunden ist, wobei die Vorrichtung (10) dazu eingerichtet ist, dass der erste Balgträger (20) in Folge einer Verschiebung des zweiten Schlittens (28) relativ zum ersten Schlitten (24) in radialer Richtung expandiert werden kann.

2. Vorrichtung (10) nach Anspruch 1, wobei der erste Balgträger (20) über einen Kegelmechanismus (30) mit dem zweiten Schlitten (28) in Verbindung steht, wobei die Vorrichtung (10) dazu eingerichtet ist, dass der Kegelmechanismus (30) bei Verschiebung des zweiten Schlittens (28) relativ zum ersten Schlitten (24) entlang der Zentralwellenrichtung Z in Richtung der Reifenaufbautrommel (16) eine reversible und zerstörungsfreie Expansion des erste Balgträgers (20) entlang der radialen Richtung bewirkt.

3. Vorrichtung (10) nach Anspruch 2, wobei der Kegelmechanismus (30) über zwei oder mehrere Schubstangen (32) mit dem zweiten Schlitten (28) verbunden ist.

4. Vorrichtung (10) nach Anspruch 2, wobei der Kegelmechanismus (30) über eine weitere Verschiebehülse mit dem zweiten Schlitten (28) verbunden ist.

5. Vorrichtung (10) nach einem der Ansprüche 1 bis 4, wobei die erste Verschiebehülse (18) über ein oder mehrere Lager (34) mit dem ersten Schlitten (24) verbunden ist.

6. Vorrichtung (10) nach einem der Ansprüche 1 bis 5, wobei die erste Positioniereinrichtung (22) ein oder mehrere Schraubgetriebe umfasst.

7. Vorrichtung (10) nach einem der Ansprüche 1 bis 6, wobei die zweite Positioniereinrichtung (26) ein oder mehrere Schraubgetriebe umfasst.

8. Vorrichtung (10) nach einem der Ansprüche 1 bis 7, wobei der erste Grundkörper drei oder mehr Nivellierfüße (36) umfasst, wobei die Vorrichtung (10) dazu eingerichtet ist, dass die Ausrichtung der Zentralwelle (14) relativ zum Untergrund über die Nivellierfüße (36) eingestellt werden kann.

9. System (38) zum Aufbau einer Reifenkarkasse, umfassend eine Vorrichtung (10) nach einem der Ansprüche 1 bis 8 sowie:
I) einen zweiten Grundkörper,
II) eine rotierbar gelagerte Gegenwelle,
III) einen am Ende der Gegenwelle angeordneten Verbindungsmechanismus zur reversiblen und zerstörungsfreien Verbindung der Gegenwelle mit der Zentralwelle, und
IV) einen an der Gegenwelle angeordnete Trägerstruktur mit einem zweiten Balgträger, wobei der zweite Balgträger reversibel und zerstörungsfrei entlang der radialen Richtung expandierbar ausgeführt ist.

10. System nach Anspruch 9, wobei die Trägerstruktur eine reversibel und zerstörungsfrei entlang der Gegenwellenrichtung verschiebbare zweite Verschiebehülse umfasst, wobei die zweite Verschiebehülse in einem über eine dritte Positioniereinrichtung mit dem zweiten Grundkörper verbundenen und reversibel und zerstörungsfrei entlang der Gegenwellenrichtung verschiebbaren dritten Schlitten gelagert ist, wobei der dritte Schlitten über eine vierte Positioniereinrichtung mit einem reversibel und zerstörungsfrei entlang der Gegenwellenrichtung verschiebbaren vierten Schlitten verbunden ist, wobei das System dazu eingerichtet ist, dass der zweite Balgträger in Folge einer Verschiebung des vierten Schlittens relativ zum dritten Schlitten in radialer Richtung expandiert werden kann.
